# EUROPÄISCHE PATENTSCHRIFT

(11) **EP 1 475 421 B1**
(45) Veröffentlichungstag und Bekanntmachung des Hinweises auf die Patenterteilung: **31.05.2006**
(21) Anmeldenummer: 04010728.6
(22) Anmeldetag: 06.05.2004
(51) Int. Cl.: C09D 133/08, C09D 5/00, C04B 41/48

(54) **Universal-Grundierungsmittel**
Universal primer
Revetement de base universel

(30) Priorität: 08.05.2003 DE 10320503
(43) Veröffentlichungstag der Anmeldung: 10.11.2004
(73) Patentinhaber: Chemische Werke Kluthe GmbH, 69115 Heidelberg (DE)
(72) Erfinder: Tacke, Ralf, 42477 Radevormwald (DE); Rose, Ingo, 44791 Bochum (DE)
(74) Vertreter: Wagner, Jutta

(56) Entgegenhaltungen:
- EP-A- 0 893 483
- DE-A- 3 832 142
- US-A- 4 990 547

## Beschreibung

Gegenstand der vorliegenden Erfindung ist ein Universal-Grundierungsmittel für mineralische Untergründe sowie Holz und verschiedene Kunststoffe.

Durch zunehmend restriktive umweltpolitische Maßnahmen ist der Schadstoffgehalt in der Luft in den vergangenen Jahren kontinuierlich abgesunken. Insbesondere die Reduzierung des Ausstoßes von SO₂-Gasen in der Luft von über 100 µg/l auf unter 20 µg/l hat zu einer Begünstigung von Algen- und Pilzbefall auf bewitterten Bauteiloberflächen geführt. Weitere energiepolitische Maßnahmen, wie z.B. die Wärmeschutzverordnung, verstärken die Ansiedlung von Mikroorganismen auf Fassaden und Mauerwerk.

Eine optisch wie auch technisch annehmbare Instandsetzung von solchen Bauteiloberflächen erfordert einerseits eine Beseitigung und Abtötung des Befalls durch Moos, Algen und Pilze. Andererseits muss bei porigen Untergründen, die eine hohe kapillare Flüssigkeitsaufnahme und/oder eine geringe Festigkeit besitzen nach der Entfernung des mikrobiellen Befalls als weiterer Arbeitsschritt eine verfestigende Maßnahme für die Oberfläche in Form einer Grundierung (Tiefgrund) durchgeführt werden. Bei partiellen starken Verfärbungen ist zusätzlich noch eine Isoliergrundierung erforderlich.

Am Markt haben sich hierzu auf die verschiedenen Einsatzgebiete zugeschnittene Produkte etabliert, so wird normalerweise zunächst die Fassade mit geeigneten Desinfektionsmitteln behandelt, die dann abgewaschen werden, anschließend auf die gegebenenfalls vortretenden Holzelemente ein geeignetes Bläueschutzmittel aufgetragen und in einem weiteren Arbeitsschritt der mineralische Untergrund mit einem verfestigenden Grundiermittel behandelt.

Bei inhaltsstoffreichen Hölzern ist, wie auch bei zuvor begrünten Fassaden, erforderlich, die aus der organischen Masse austretenden Gerbsäuren und andere verfärbende Stoffe, die sich in meistens mit braunen Flecken bemerkbar machen, mit einer entsprechenden Isolierungsgrundierung zu versehen, damit sie nicht durch den Renovierungsanstrich durchschlagen.

Aus der DE 37 11 680 ist eine wässrige, biozide kationische Kunststoffdispersion bekannt, die als fungizides, bakterizides und algizides Ausrüstungsmittel verwendbar ist. Die wässrige Kunststoffdispersion enthält hierzu eine biozide, Kationisch-tensioaktive quaternäre Ammoniumverbindung. Obwohl diese Dispersionen einen befriedigenden Erstanstrich ergeben, sind sie für eine Instandsetzung nicht geeignet.

Die DE 38 32 142 A1 betrifft ein Verfahren zur Herstellung eines mehrschichtigen, schützenden und/oder dekorativen Überzugs sowie wasserverdünnbare Beschichtungszusammensetzungen zur Herstellung der Basisschicht von Zweischichtlackierungen. Die pseudoplastische bzw. thixotrope wasserverdünnbare Basisbeschichtungszusammensetzung enhält dabei Wasser, gegebenenfalls organische Lösemittel, ein wasserverdünnbares Bindemittel, Pigmentteilchen, ein Verdickungsmittel und vernetzte Polyacrylatmikroteilchen mit einem Durchmesser von 0,01 bis 10 µm. Solche Basisbeschichtungen für Zweischichtlacke, die insbesondere im Automobilbau Anwendung finden, eignen sich nicht als Universalgrundierungsmittel zur Instandsetzung von Oberflächen.

Die EP 0 893 483 A2 betrifft sprühbare lösemittelbasierende Primerzusammensetzungen zur Verwendung als Basisbeschichtung in lichtempfindlichen Kunststoffteilen von Automobilen. Die Primer sollen das Eindringen von ultraviolettem Licht verhindern. Die beschriebenen Zusammensetzungen sind lösemittelbasierend und schon deswegen als Universalgrundierungsmittel, für welche heute weitgehende Lösemittelfreiheit gefordert wird, nicht brauchbar.

Die US 4,990,547 beschreibt Beschichtungszusammensetzungen für Netze, Boote und andere im Wasser zu nutzende Geräte, wobei Vinylacetat, Copolymere davon oder Polyvinylchlorid-Acrylcopolymere als Basis mit Ammoniumverbindungen als Algizide bzw. antifouling Komponenten enthalten sind. Zur Instandsetzung von Oberflächen sind diese Zusammensetzungen nicht geeignet.

Die im Stand der Technik erforderlichen, vielfältigen Maßnahmen erweisen sich als Arbeits-, Zeit- und Materialaufwendig, so dass es Ziel der Erfindung ist einen Anstrich zu schaffen, der auf verschiedenen Untergründen, insbesondere silikatischen Untergründen, nicht nur eine Abtötung des mikrobiellen Befalls, sondern auch eine fleckenisolierende Wirkung und eine ausreichende verfestigende, tiefenwirksame Grundierung bewirkt, d. h. sowohl eine antimikrobielle als auch eine verfestigende und hydrophobierende Mischung darstellt. Um die weitere Bedingung zu erfüllen, die Schadstoffemission durch Lösemittel gering zu halten, sollte das Produkt weiterhin vorzugsweise Wasser als Lösemittel enthalten.

Die Lösung dieser Aufgabe wird durch die im Hauptanspruch angegebenen Maßnahmen verwirklicht und durch die Maßnahmen der Unteransprüche gefördert.

Die erfindungsgemäßen Grundierungsmittel enthalten ein Bindemittel auf Basis von Acrylathydrosolen, wobei außer Acrylat und Methacrylat auch in geringerer Menge Maleinate und Styrol einpolymerisiert sein können. Besonders bevorzugt sind Acrylatterpolymere mit bis zu 20 %, vorzugsweise 5-10 % einpolymerisiertem Maleinat und Styrol. Die Polymerisate werden als wässrige Dispersion mit einer Konzentration von 12-60 %, vorzugsweise 35-40 % eingesetzt. Die mittlere Teilchengröße der Kunststoffpartikel sollte ≤ 70 nm, vorzugsweise ≤ 50 nm und insbesondere ≤ 40 nm sein. Besonders brauchbar sind Mischungen die eine mittlere Teilchengröße von 30-35 nm aufweisen. Der pH-Wert der Dispersionen wird mit organischer Säure auf 2-6, vorzugsweise auf 4-5, insbesondere auf 4,5-4,6 eingestellt.

Eine weitere wesentliche Komponente der erfindungsgemäßen Zusammensetzung ist ein biozider Wirkstoff in Form einer kationischen quartären Ammoniumverbindung. Solche Verbindungen sind in der Literatur gut bekannt, insbesondere bevorzugt werden Benzalkoniumchlorid und quartäre Alkylammoniumborate, wie sie insbesondere als Holzschutzmittel bekannt sind, eingesetzt.

Die Alkylammoniumborate haben vorzugsweise Alkylgruppen mit einer Kettenlänge von 12-16 C-Atomen, sind in einem pH-Bereich von 4-10, insbesondere 4-6, wie für die erfindungsgemäßen Acrylatbindemittel erforderlich ist, stabil und sollten gleichermaßen gegen Bakterien, Pilze, Algen und Flechten wirksam sein. Die minimale Hemmkonzentration solcher Biozide liegt üblicherweise im Bereich von 5-50 ppm, so dass eine Zugabe von 0,1-5 %, vorzugsweise 0,5-2 % zur Bindemittelmischung eine wirksame biozide Anwendungskonzentration ergibt.

Aus Arbeits- und Umweltschutzgründen sollte als Lösungsmittel vorzugsweise Wasser in einer Menge von 30-90 % enthalten sein, wobei als Weichmacher, Lösungsvermittler und Dispersionsstabilisatoren noch zusätzlich organische Lösemittel, wie Alkohole, Ether, Ester oder Ketone, die für diesen Zweck in der Kunststoffindustrie bekannt sind, in Mengen bis zu 10 %, vorzugsweise bis zu 5 % des Lösemittels zugefügt werden können.

Ferner können übliche Additive wie Entschäumer, Netzmittel, Neutralisationsmittel, Komplexbildner, Verdickungsmittel, Verlaufshilfsmittel, UV-Stabilisatoren sowie gegebenenfalls Farbstoffe, Farbpigmente oder Füllstoffe enthalten sein. Die Additive können 1-5 %, die Farbpigmente und Füllstoffe bis zu 40 %, vorzugsweise bis zu 25 % der Mischung ausmachen. Die Additive sind üblicherweise bereits in den verwendeten käuflichen Bindemitteldispersionen enthalten.

Die erfindungsgemäßen Bindemittelmischungen werden in bekannter Weise durch Aufstreichen oder Aufsprühen in dünner Schicht auf die zu schützenden Flächen aufgetragen. Durch die geringe Teilchengröße der Bindemittel zeigen die erfindungsgemäßen Grundiermittel ein hohes Penetrationsvermögen. Durch die verwendeten Acrylatbindemittel wird eine gute Haftung auf verschiedenen Untergründen wie Beton, Mörtel, Backstein aber auch auf Holz und verschiedenen Kunststoffen, wie z.B. PVC, Polycarbonat, gewährleistet.

Das Zusammenwirken der kationischen Stabilisierung der enthaltenen Bindemittel mit den quartären Ammoniumverbindungen führt zu einer langanhaltenden Isolierung gegen erneuten mikrobiellen Befall und isoliert gleichzeitig gegen die meisten färbenden Substanzen, die gegebenenfalls im Untergrund noch enthalten sein können. Das Zusammenwirken der kationischen Hydrosole mit den Bioziden verhindert darüber hinaus deren Auswaschung.

Alle %-Angaben beziehen sich, soweit nichts anderes angegeben ist, auf Masse-%.

### Ausführungsbeispiel:

25 kg einer Acrylat-/Maleinat-/Styroldispersion (38 %-ig in Wasser pH 4,6), 4 kg quartäre Alkylammoniumborate (50 %-ig in Wasser) und 71 kg Wasser werden mit einem hochtourigen Rührer zu einer Bindemittelmischung vereinigt. Die Mischung enthält aus der verwendeten Acrylatdispersion einen ausreichenden Anteil an Emulgatoren, Netzmitteln und UV-Stabilisatoren. Die Mischung ist in dieser Form gebrauchsfertig und kann zum Überziehen von Beton, Mörtel, Stein oder auch Holz und Kunststoff eingesetzt werden.

### Vergleichsversuche

Zunächst wurden verschiedene Grundierungen analog Beispiel 1 mit den in Tabelle 1 angegebenen kationischen Dispersionen hergestellt.

**Tabelle 1**

| **Kation. Dispersion** | **chem. Natur** | **Teilchengröße** | **pH** | **Feststoffgehalt** |
|---|---|---|---|---|
| **Enorex TE 204, Collano AG** | **Vinylcopolymerisat** | **0,15 µm** | **4,5** | **50%** |
| **P6233, Ercros GmbH** | **Reinacrylat** | **0,10 µm** | **4,5** | **50 %** |
| | **Reinacrylat** | **0,07 µm** | **4,5** | **40 %** |
| | **Reinacrylat** | **0,05 µm** | **4,5** | **38 %** |
| **Syntran CX 30-152, Holthuizen Chemie B.V.** | **Styrolacrylat** | **0,10 µm** | **6** | **25 %** |
| " | **Styrolacrylat** | **0,07 µm** | **6** | **35 %** |
| | **Styrolacrylat** | **0,05 µm** | **6** | **35%** |

Zur Prüfung des Bindevermögens wurde eine 70%-ige Kreide Slurry von 20 g hergestellt und zu Prüfkörpern verarbeitet. Hierzu wurde die Slurry in einem Behältnis geformt und zunächst 1 Tag bei Zimmertemperatur getrocknet. Anschließend wurde 60 min bei 50°C im Ofen getrocknet. Nach Trocknung werden 0,5 g formulierte Grundierung auf den Prüfkörper gegeben. Der getrocknete Prüfkörper wird durch Auswaschung vom nicht verfestigten Anteil befreit. Abschließend wird der trockene verfestigte Kern ausgewogen. Die Ergebnisse sind in Tabelle 2 dargestellt.

**Tabelle 2: Anteil verfestigtes Material**

| **Dispersion** | **Teilchengröße** | **Verfestigung** |
|---|---|---|
| **Vinylcopolymerisat** | **0,15 µm** | **0,053 g** |
| **Reinacrylat** | **0,10 µm** | **0,225 g** |
| **Reinacrylat** | **0,07 µm** | **0,706 g** |
| **Reinacrylat** | **0,05 µm** | **2,064 g** |
| **Styrolacrylat** | **0,10 µm** | **0,188 g** |
| **Styrolacrylat** | **0,07 µm** | **0,618 g** |
| **Styrolacrylat** | **0,05 µm** | **1,752 g** |

Zur Überprüfung der am besten geeigneten Dispersionen auf Holz und Stein wurden jeweils 120 ml/m² auf die Oberfläche aufgetragen und anschließend die Eindringtiefe vermessen. Die Eindringtiefe ist für drei verschiedene Grundierungen in Tabelle 3 aufgelistet.

**Tabelle 3: Eindringtiefe bei verscheidenen Teilchengrößen und Untergründen**

| | ***Reinacrylat 0,07 µm*** | ***Reinacrylat 0,05 µm*** | ***Styrolacrylat 0,05 µm*** |
|---|---|---|---|
| **Untergrund** | **Eindringtiefe** | **Eindringtiefe** | **Eindringtiefe** |
| **Kiefer** | **0,9 mm** | **1,5 mm** | **1,3 mm** |
| **Buche** | **0,4 mm** | **0,8 mm** | **0,7 mm** |
| **Kalksandstein** | **1,4 mm** | **2,6 mm** | **2,7 mm** |
| **Beton B 35** | **0,6 mm** | **1,8 mm** | **1,7 mm** |

Die Prüfung der Isolierwirkung auf Eichenholz und Kork gegen Durchschlagen von Inhaltsstoffen nach Beschichtung mit Universal-Grundierung und Überbeschichtung mit einer waschbeständigen, wässrigen Dispersionsfarbe bzw. einem Wasserlack erfolgt folgendermaßen:
Auf die Oberfläche wurde jeweils zunächst die Grundierung aufgetragen, trocknen lassen und anschließend die Überbeschichtung aufgebracht. Die Ergebnisse bezüglich der Isolierung gegen ein Durchschlagen von Verfärbungen wurden visuell beurteilt.

| | | | |
|---|---|---|---|
| **Bewertung:** | 1 = sehr gut | 2 = gut | 3 = befriedigend |
| | 4 = ausreichend | 5 = mangelhaft | 6 = ungenügend |

In Tabelle 4 sind die Ergebnisse zusammengestellt.

**Tabelle 4: Wirksamkeit gegen ein Durchschlagen von Verfärbungen**

| | | Untergrund Eiche | | Untergrund Kork | |
|---|---|---|---|---|---|
| Dispersion | Teilchengröße | Dispersionsfarbe | Wasserlack | Dispersionsfarbe | Wasserlack |
| Vinylcopolymerisat | 0,15 µm | 3 | 3 | 3 | 2 |
| Reinacrylat | 0,10 µm | 5 | 4 | 4 | 3- |
| Reinacrylat | 0,07 µm | 4 | 3 | 2 | 2 |
| Reinacrylat | 0,05 µm | 1 | 1 | 1 | 1 |
| Styrolacrylat | 0,10 µm | 4 | 4 | 3 | 3 |
| Styrolacrylat | 0,07 µm | 4 | 4 | 4 | 3 |
| Styrolacrylat | 0,05 µm | 3 | 2 | 2 | 2 |

Nur bei Teilchengrößen von 70 nm und weniger ergibt sich für alle geforderten Eigenschaften eine ausreichende Qualität.

## Patentansprüche

1. Universal-Grundierungsmittel zur Instandsetzung von Oberflächen, enthaltend:
| | |
|---|---|
| 5-40 % | eines kationischen Acrylat-Hydrosol-Bindemittels mit einer mittleren Teilchengröße von ≤ 70 nm, |
| 0-40 % | Pigmente, Füllstoffe sowie weitere übliche Hilfsmittel, |
| 0,5-5 % | kationische, quartäre Ammoniumverbindung als bioziden Wirkstoff, |
Rest Wasser.

2. Universal-Grundierungsmittel gemäß Anspruch 1, **dadurch gekennzeichnet, dass** die Teilchengröße ≤ 50 nm ist.

3. Universal-Grundierungsmittel gemäß Anspruch 1 oder 2, **dadurch gekennzeichnet, dass** Benzalkoniumchlorid und/oder quartäre Alkylammoniumborate mit Alkylgruppen einer Kettenlänge von C₁₂ bis C₁₆ als biozider Wirkstoff enthalten sind.

4. Universal-Grundierungsmittel gemäß einem der Ansprüche 1 bis 3, **dadurch gekennzeichnet, dass** 10 % kationisches Acrylat-Hydrosol-Bindemittel enthalten sind.

5. Universal-Grundierungsmittel gemäß einem der Ansprüche 1 bis 4, **dadurch gekennzeichnet**, das als Bindemittel eine wässrige Dispersion mit einem nichtflüchtigen Anteil von 12-60 %, einer Teilchengröße von 32-35 nm, einer Mindestfilmtemperatur < 5° C und einem pH-Wert von 2-6 enthalten ist.

6. Universal-Grundierungsmittel gemäß einem der Ansprüche 1 bis 5, **dadurch gekennzeichnet, dass** zusätzlich als Schutzkolloid ein Acrylatharz mit geringen Styrolanteilen kationisch neutralisiert enthalten ist.

7. Universal-Grundierungsmittel gemäß einem der Ansprüche 1 bis 6, **dadurch gekennzeichnet, dass** als Lösemittel ausschließlich Wasser verwendet wird.

8. Universal-Grundierungsmittel gemäß einem der Ansprüche 1 bis 7, **dadurch gekennzeichnet, dass** als Additive Entschäumer, Netzmittel, Neutralisationsmittel, Verdickungsmittel, Komplexbildner, VerlaufsHilfsmittel und andere in der Lack- und Kunststoff-Industrie typischen Additive und Zuschlagstoffe enthalten sein können.

9. Verwendung eines Universal-Grundierungsmittels gemäß einem der Ansprüche 1 bis 8, **dadurch gekennzeichnet, dass** als mögliche Untergründe Holzarten, verschiedene Kunststoffe, mineralische Untergründe sowie Stein, Mauerwerk, Putz, Wand- und Fassadenflächen sowie Ton, Ziegel, Beton oder Polymerbeton beschichtet werden.

## Claims

1. Universal primer for repairing surfaces, containing:
| | |
|---|---|
| 5-40 % | of a cationic acrylate hydrosol binder with an average particle size of ≤ 70 nm, |
| 0-40 % | pigments, fillers and other common auxiliary agents, |
| 0.5-5 % | cationic, quaternary ammonium compounds as biocidal active principle, |
the remainder being water.

2. Universal primer according to claim 1 **characterised in that** the particle size is ≤ 50 nm.

3. Universal primer according to claim 1 or 2 **characterised in that** benzalkonium chloride and/or quaternary alkyl ammonium borates with alkyl groups of a chain length of C₁₂ to C₁₆ are contained therein as biocidal active principle.

4. Universal primer according to one of claims 1 to 3 **characterised in that** 10 % cationic acrylate hydrosol binder are contained therein.

5. Universal primer according to one of claims 1 to 4 **characterised in that** an aqueous dispersion with a non-volatile proportion of 12-60 %, a particle size of 32-35 nm, a minimum film temperature of < 5 °C and a pH of 2-6 is contained therein as binder.

6. Universal primer according to one of claims 1 to 5 **characterised in that** an acrylate resin with a low proportions of styrene is contained as protective colloid in the cationically neutralised state.

7. Universal primer according to one of claims 1 to 6 **characterised in that** water is used exclusively as solvent.

8. Universal primer according to one of claims 1 to 7 **characterised in that** defoaming agents, wetting agents, neutralising agents, thickeners, complexing agents, levelling agents and other additives and agents to be added typically used in the paint and plastics industry may be contained therein as additives.

9. Use of a universal primer according to one of claims 1 to 8 **characterised in that** types of wood, different plastics, mineral substrates and stone, masonry, plaster, wall and facade surfaces as well as clay, brick, concrete or polymer concrete can be coated as possible substrates.

## Revendications

1. Apprêt universel pour la réfection de surfaces, contenant :
à concurrence de 5 à 40 %, un liant cationique d'acrylate-hydrosol possédant une granulométrie moyenne ≤ 70 nm ;
à concurrence de 0 à 40 %, des pigments, des matières de charge ainsi que d'autres agents auxiliaires habituels ;
à concurrence de 0,5 à 5 %, un composé d'ammonium quaternaire cationique à titre de principe actif biocide ;
le reste étant de l'eau.

2. Apprêt universel selon la revendication 1, **caractérisé en ce que** la granulométrie est ≤ 50 nm.

3. Apprêt universel selon la revendication 1 ou 2, **caractérisé en ce qu'**il contient du chlorure de benzalkonium et/ou des borates d'alkylammonium quaternaires comprenant des groupes alkyle d'une longueur de chaîne en C₁₂-C₁₆ à titre de principe actif biocide.

4. Apprêt universel selon l'une quelconque des revendications 1 à 3, **caractérisé en ce qu'**il contient un liant cationique d'acrylate-hydrosol à concurrence de 10 %.

5. Apprêt universel selon l'une quelconque des revendications 1 à 4, **caractérisé en ce qu'**il contient, à titre de liant, une dispersion aqueuse possédant une fraction non volatile à concurrence d e 12 à 60 % , une granulométrie de 32 à 35 nm, une température minimale du film < 5 °C et une valeur de pH de 2 à 6.

6. Apprêt universel selon l'une quelconque des revendications 1 à 5, **caractérisé en ce qu'**il contient en outre, à titre de colloïde de protection, une résine acrylique soumise à une neutralisation par voie cationique avec des fractions minimes de styrène.

7. Apprêt universel selon l'une quelconque des revendications 1 à 6, **caractérisé en ce qu'**on utilise, comme solvant, exclusivement de l'eau.

8. Apprêt universel selon l'une quelconque des revendications 1 à 7, **caractérisé en ce qu'**il peut en outre contenir, à titre d'additifs, des agents antimousse, des agents mouillants, des agents de neutralisation, des épaississants, des formateurs de complexes, des agents favorisant l'écoulement, ainsi que d'autres adjuvants et additifs typiques dans l'industrie des laques, des peintures et des matières synthétiques.

9. Utilisation d'un apprêt universel selon l'une quelconque des revendications 1 à 8, **caractérisé en ce que**, à titre de substrats possibles à enduire, on peut citer des essences de bois, différentes matières synthétiques, des substrats minéraux, de même que la pierre, la maçonnerie, le crépi, des surfaces de murs et de façades, ainsi que de l'argile, des tuiles, du béton ou du béton polymère.
